# EUROPÄISCHE PATENTANMELDUNG

(11) **EP 4 494 804 A1**
(43) Veröffentlichungstag der Anmeldung: **22.01.2025**
(21) Anmeldenummer: 23186571.8
(22) Anmeldetag: 20.07.2023
(51) Int. Cl.: B23K 35/36, B23K 35/26

(54) **FLUSSMITTEL UND DIESES UMFASSENDE LOTPASTE**

(71) Anmelder: Heraeus Electronics GmbH & Co. KG, 63450 Hanau (DE)
(72) Erfinder: Neidert, Michael, 63450 Hanau (DE); Käss, Steffen, 63450 Hanau (DE); Loosz, Christian, 63450 Hanau (DE)
(74) Vertreter: Heraeus IP

(57) **Zusammenfassung**

Flussmittel bestehend aus
(i) 30 bis 80 Gew.-% eines oder mehrerer saurer Harze,
(ii) 10 bis 60 Gew.-% mindestens eines organischen Lösemittels,
(iii) 0 bis 15 Gew.-% eines oder mehrerer Amine, und
(iv) 0 bis 20 Gew.-% eines oder mehrerer von den Bestandteilen (i) bis (iii) verschiedener Bestandteile,

wobei das Flussmittel sich dadurch auszeichnet, dass es während einer im Bereich von 25 bis 350°C mit einer Aufheizrate von 10 K/min und unter Zutritt von synthetischer Luft durchgeführten thermogravimetrischen Analyse bei Erreichen einer Temperatur von 280°C einen Gewichtsverlust von ≥50 Gew.-% erleidet;
und Lotpaste bestehend aus 80 bis 92 Gew.-% eines oder mehrerer verschiedener Lote und 8 bis 20 Gew.-% des Flussmittels.

## Beschreibung

Die vorliegende Erfindung betrifft ein Flussmittel für Lotpasten und eine das Flussmittel umfassende Lotpaste, insbesondere für das Befestigen von elektronischen Bauteilen auf Substraten.

Lotpasten, insbesondere Weichlotpasten, finden vor allem in der Fertigung von elektronischen Schaltungen Anwendung und dienen der Herstellung einer mechanischen, elektrischen und thermischen Verbindung zwischen einem elektronischen Bauteil und einem Substrat, genauer gesagt, zwischen dafür vorgesehenen Kontaktflächen derselben.

Beispiele für elektronische Bauteile im Sinne der vorliegenden Patentanmeldung umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen und dergleichen.

Beispiele für Substrate im Sinne der vorliegenden Patentanmeldung umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Üblicherweise wird das elektronische Bauteil über die Lotpaste mit dem Substrat in Kontakt bzw. auf dieses aufgebracht. Die Lotpaste wird erwärmt, um das Lot (Lotmetall, Lotlegierung) in der Paste durch beispielsweise einen Reflow-Prozess aufzuschmelzen. Nach dem Abkühlen und Erstarren des Lots sind elektronisches Bauteil und Substrat fest miteinander verbunden.

Neben Lotpulver enthalten Lotpasten typischerweise Flussmittel. Flussmittel dienen unter anderem dazu, die Oxidschicht auf den Oberflächen des Lotpulvers, des elektronischen Bauteils und des Substrates aufzulösen und so für eine bessere Benetzbarkeit beim Lötprozess zu sorgen.

Bestandteil von Lotpasten bildende Flussmittel basieren typischerweise auf Naturharzen wie insbesondere Kolophonium. Ferner sind üblicherweise organische Lösungsmittel, puffernd wirkende Basen wie Amine und Aktivatoren wie Carbonsäuren oder Halogenverbindungen als Bestandteile in solchen Flussmitteln enthalten.

Aufgabe der Erfindung ist die Bereitstellung einer Lotpaste mit einer möglichst geringen Rate an Fehlstellen wie Gas- oder Lufteinschlüssen in Form von Hohlräumen (Voids) in aus der Lotpaste erzeugten Lötverbindungen. Die zu findende Lotpaste soll außerdem möglichst auch eine gute Lötbarkeit in Gegenwart von Luft aufweisen, d.h. auch ohne besondere Maßnahmen zum Ausschluss von Luftsauerstoff ergreifen zu müssen, wie Vakuumlöten oder Löten unter Schutzgas.

Die Anmelderin konnte ein die Aufgabe lösendes Flussmittel respektive eine die Aufgabe lösende, das Flussmittel umfassende Lotpaste entwickeln. Dementsprechend besteht die Erfindung in der Bereitstellung eines Flussmittels bestehend aus
(i) 30 bis 80 Gew.-% (Gewichts-%), bevorzugt 40 bis 70 Gew.-% eines oder mehrerer saurer Harze,
(ii) 10 bis 60 Gew.-%, bevorzugt 20 bis 50 Gew.-% mindestens eines organischen Lösemittels,
(iii) 0 bis 15 Gew.-%, bevorzugt 4 bis 12 Gew.-% eines oder mehrerer Amine, und
(iv) 0 bis 20 Gew.-% eines oder mehrerer von den Bestandteilen (i) bis (iii) verschiedener Bestandteile,
wobei das Flussmittel sich dadurch auszeichnet, dass es während einer im Bereich von 25 bis 350°C mit einer Aufheizrate von 10 K/min und unter Zutritt von synthetischer Luft durchgeführten thermogravimetrischen Analyse (TGA) bei Erreichen einer Temperatur von 280°C einen Gewichtsverlust von ≥50 Gew.-% erleidet.

Je nach Anwesenheit der Bestandteile (iii) und/oder (iv) kann das erfindungsgemäße Flussmittel dementsprechend aus den Bestandteilen (i) plus (ii) oder (i) plus (ii) plus (iii) oder (i) plus (ii) plus (iv) oder (i) plus (ii) plus (iii) plus (iv) bestehen und bei jeder dieser Alternativen beträgt die Summe der Gew.-% der jeweiligen Bestandteile 100 Gew.-%.

Das erfindungsgemäße Flussmittel umfasst als Bestandteil (i) 30 bis 80 Gew.-%, bevorzugt 40 bis 70 Gew.-% eines oder mehrerer saurer Harze. Die ein oder mehreren sauren Harze können ausgewählt sein aus der Gruppe bestehend aus sauren Oligoestern und sauren (Meth)acrylcopolymeren. (Meth)acryl" bedeutet "Methacryl" und/oder "Acryl". Bei den sauren Oligoestern und den sauren (Meth)acrylcopolymeren handelt es sich insbesondere jeweils um Carboxylgruppen tragende Harze, d.h. um Harze, welche ihren sauren Charakter ihren Carboxylgruppen verdanken.

In einer ersten Ausführungsform besteht Bestandteil (i) des erfindungsgemäßen Flussmittels aus einem oder mehreren sauren Harzen in Form eines oder mehrerer verschiedener saurer Oligoester.

In einer zweiten Ausführungsform besteht Bestandteil (i) des erfindungsgemäßen Flussmittels aus einem oder mehreren sauren Harzen in Form eines oder mehrerer verschiedener saurer (Meth)acrylcopolymere.

In einer dritten Ausführungsform besteht Bestandteil (i) des erfindungsgemäßen Flussmittels aus einer Kombination aus einem oder mehreren sauren Oligoestern und einem oder mehreren sauren (Meth)acrylcopolymeren.

Der oder die hierin als mögliche Bestandteile (i) erwähnten sauren Oligoester haben eine Säurezahl im Bereich von 150 bis 300 mg KOH/g und eine gewichtsmittlere Molmasse M_{w} im Bereich von 300 bis 600. Bevorzugt sind saure Oligoester mit einer Säurezahl im Bereich von 200 bis 250 mg KOH/g und mit einer gewichtsmittleren Molmasse M_{w} im Bereich von 400 bis 550. Besonders bevorzugt handelt es sich um nur einen sauren Oligoester mit einer Säurezahl im Bereich von 200 bis 250 mg KOH/g und mit einer gewichtsmittleren Molmasse M_{w} im Bereich von 400 bis 550. Hierin wird unterschieden zwischen einem sauren Oligoester und mehreren verschiedenen sauren Oligoestern. Zur Vermeidung jeglichen Missverständnisses, der Begriff "ein saurer Oligoester" bezieht sich auf ein Oligomerengemisch respektive auf einen oligomeren Polyester mit qualitativ und quantitativ definiertem Aufbau, d.h. mit einem Aufbau aus nach Art und Menge definierten Bausteinen. Wie schon aus der Erwähnung der gewichtsmittleren Molmasse M_{w} hervorgeht, weist auch der "eine saure Oligoester" eine Molmassenverteilung auf, d.h. er liegt als Gemisch verschieden großer oligomerer Polyestermoleküle vor. Dementsprechend bezieht sich der Begriff "mehrere verschiedene saure Oligoester" auf eine Kombination verschiedener Oligomerengemische respektive auf mehrere jeweils verschieden aufgebaute oligomere Polyester; jeder dieser verschiedenen oligomeren Polyester weist dabei eine Molmassenverteilung auf.

Der in dieser Beschreibung und in den Beispielen verwendete Ausdruck "Säurezahl" bezieht sich auf eine gemäß DIN EN ISO 2114 in mg KOH/g (Milligramm KOH pro Gramm) bestimmbare Säurezahl (SZ).

Sofern nicht anders vermerkt, handelt es sich bei allen in dieser Beschreibung und in den Beispielen zitierten Normen jeweils um die aktuelle Fassung zum Zeitpunkt des Prioritätsdatums der vorliegenden Patentanmeldung.

Die in dieser Beschreibung und in den Beispielen erwähnte gewichtsmittlere Molmasse M_{w} kann in üblicher dem Fachmann bekannter Weise mittels GPC beispielsweise gemäß DIN 55672-1 (März 2016; vernetztes Polystyrol als immobile Phase, Tetrahydrofuran als flüssige Phase, Polystyrol-Standards, 23°C) bestimmt werden.

Die sauren Oligoester können aus einem oder mehreren verschiedenen niedermolekularen Polyolen als Hydroxylbausteine und einer oder mehreren verschiedenen niedermolekularen Polycarbonsäuren als Carboxylbausteine aufgebaut sein.

Der hierin verwendete Begriff "niedermolekular" bezieht sich auf durch Summen- und Strukturformel definierte und keine Molmassenverteilung aufweisende Verbindungen.

Bei dem oder den sauren Oligoestern handelt es sich bevorzugt um lineare saure Oligoester mit einer oder zwei terminalen Carboxylgruppen respektive um ein Gemisch solcher Oligoester. Die bevorzugten linearen sauren Oligoester können dabei aus einem oder mehreren verschiedenen niedermolekularen Diolen und einer oder mehreren verschiedenen niedermolekularen Dicarbonsäuren aufgebaut sein. Beispiele für niedermolekulare Diole umfassen aliphatische und cycloaliphatische Diole wie beispielsweise Ethylenglykol, 2-Ethyl-1,3-hexandiol, 1,2- und 1,3-Propylenglykol, 1,3-Butandiol, 1,4-Butandiol, 2,3-Butandiol, 1,5-Pentandiol, 1,6-Hexandiol, Trimethylhexandiol, hydrierte Bisphenole, Cyclohexandiole, 1,4-Cyclohexandimethanol, Neopentylglykol und Butylethylpropandiol. Bevorzugt handelt es sich bei den niedermolekularen Diolen um solche ausgewählt aus der Gruppe bestehend aus niedermolekularen cycloaliphatischen Diolen. Beispiele für niedermolekulare Dicarbonsäuren umfassen Tetrahydrophthalsäure, Maleinsäure, Fumarsäure, Hexahydrophthalsäure, 1,3-Cyclohexandicarbonsäure und 1,4-Cyclohexandicarbonsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure. Bevorzugt handelt es sich bei den Dicarbonsäuren um solche ausgewählt aus der Gruppe bestehend aus aromatischen Dicarbonsäuren, wie beispielsweise die isomeren Phthalsäuren, speziell ortho-Phthalsäure.

Verfahren zur Herstellung der sauren Oligoester durch Polykondensation niedermolekularer Polyole als Hydroxylbausteine und niedermolekularer Polycarbonsäuren als Carboxylbausteine sind dem Fachmann, d.h. einem Kunstharz- oder Polymerchemiker wohlbekannt. Bei der üblicherweise in der Schmelze durchgeführten Polykondensation kommt es im Zuge einer Veresterungsreaktion zur Wasserabspaltung; das Wasser wird dabei aus der Reaktionsmischung entfernt, insbesondere durch Abdestillieren, gegebenenfalls azeotrop oder mit Unterstützung durch Anlegen eines Unterdrucks. Selbstverständlich kann anstelle von Polycarbonsäure - soweit existent - entsprechendes Säureanhydrid verwendet werden, welches unter Ringöffnung mit dem oder den Hydroxylbausteinen verestert werden kann.

Das oder die hierin als mögliche Bestandteile (i) erwähnten sauren (Meth)acrylcopolymere haben eine Säurezahl im Bereich von 100 bis 350 mg KOH/g, bevorzugt von 150 bis 300 mg KOH/g. Bevorzugt handelt es sich um nur ein derartiges saures (Meth)acrylcopolymer. Das oder die sauren (Meth)acrylcopolymere haben eine gewichtsmittlere Molmasse M_{w} beispielsweise im Bereich von 1000 bis 3500 oder bevorzugt im Bereich von 1000 bis 3000. Bevorzugt sind saure (Meth)acrylcopolymere mit einer Säurezahl im Bereich von 100 bis 350 mg KOH/g und mit einer gewichtsmittleren Molmasse M_{w} im Bereich von 1000 bis 3500. Besonders bevorzugt sind saure (Meth)acrylcopolymere mit einer Säurezahl im Bereich von 150 bis 300 mg KOH/g und mit einer gewichtsmittleren Molmasse M_{w} im Bereich von 1000 bis 3000. Es handelt sich um in üblicher dem Fachmann bekannter Weise durch radikalische Copolymerisation herstellbare Copolymere von (Meth)acrylverbindungen, wobei die Copolymeren auch andere Comonomere als solche vom (Meth)acryl-Typ, wie beispielsweise Vinylverbindungen und/oder andere olefinisch ungesättigte radikalisch copolymerisierbare Verbindungen, in einem Gewichtsanteil von insgesamt < 50 Gew.-%, bezogen auf gesamtes saures (Meth)acrylcopolymer umfassen können. Beispiele für die > 50 Gew.-%, bezogen auf gesamtes saures (Meth)acrylcopolymer, ausmachenden (Meth)acrylverbindungen sind (Meth)acrylsäure, (Meth)acrylsäureester und (Meth)acrylamide. Beispiele für Vinylverbindungen umfassen Verbindungen wie Vinylester, Vinylether, Styrol und dergleichen.

Es ist bevorzugt, wenn das oder die sauren (Meth)acrylcopolymere eine Glasübergangstemperatur (T_{g}) im Bereich von >0°C aufweisen, dabei jedoch im Allgemeinen ≤105°C. Die Bestimmung der Glasübergangstemperatur kann mittels dynamischer Differenzkalorimetrie (DSC) in Anlehnung an DIN 51007 mit einer Aufheizrate von 10K/min erfolgen.

Saure (Meth)acrylcopolymere vorerläuterten Typs sind kommerziell erhältlich. Beispiele dafür findet man unter mit Indurez bezeichneten Produkten von Indulor Chemie GmbH und unter mit Joncryl^{®} bezeichneten Produkten von BASF.

Als Bestandteil (ii) umfasst das erfindungsgemäße Flussmittel 10 bis 60 Gew.-%, bevorzugt 20 bis 50 Gew.-% mindestens eines organischen Lösemittels. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon. Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon. Zur Vermeidung von Missverständnissen, die hier an dieser Stelle als Beispiele genannten Diole betreffen bei der Rezeptierung des erfindungsgemäßen Flussmittels als ein Bestandteil vom Typ (ii) bewusst zugesetzte Diole. Letztere sind nicht zu verwechseln mit etwaigen ungewollt und unvermeidlich in das erfindungsgemäße Flussmittel gelangten Verunreinigungen in Form von Spuren von bei der Synthese eines etwaigen sauren Oligoesters als Hydroxylbausteine verwendeten und nicht in den sauren Oligoester eingebauten (nicht einkondensierten) Diolen.

Als Bestandteil (iii) umfasst das erfindungsgemäße Flussmittel 0 bis 15 Gew.-%, bevorzugt 4 bis 12 Gew.-% eines oder mehrerer Amine, d.h. das erfindungsgemäße Flussmittel kann ein oder mehrere Amine umfassen oder frei davon sein, bevorzugt sind ein oder mehrere Amine umfasst. Beispiele für Amine umfassen N,N,N',N'-Tetramethylethylendiamin, N,N,N',N'-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, Diethylamin, Triethylamin, Cyclohexylamin, Diethanolamin, Triethanolamin, hydriertes Talg-alkylamin, hydriertes (Talgalkyl)dimethylamin und hydriertes Bis(talg-alkyl)methylamin.

Als Bestandteil (iv) umfasst das erfindungsgemäße Flussmittel 0 bis 20 Gew.-% eines oder mehrerer von den Bestandteilen (i) bis (iii) verschiedener Bestandteile, d.h. das erfindungsgemäße Flussmittel kann einen oder mehrere Bestandteile vom Typ (iv) umfassen oder frei davon sein. Beispiele für Bestandteile vom Typ (iv) umfassen insbesondere Verdickungsmittel, aber gegebenenfalls auch Aktivatoren, Entschäumer, Benetzungshilfsmittel und/oder Stabilisatoren. Ein nicht zu unterschätzender Vorteil des erfindungsgemäßen Flussmittels kann es allerdings sein, Aktivatoren nicht zwingend zu benötigen, also auch frei von Aktivatoren formuliert werden zu können.

Beispiele für Verdickungsmittel umfassen Ethylcellulose, hydriertes Rizinusöl, Glycerin-tris-12-hydroxystearin, Polyamide und modifiziertes Glycerin-tris-12-hydroxystearin.

Beispiele für als Aktivatoren verwendbare niedermolekulare Carbonsäuren umfassen Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure. Zur Vermeidung von Missverständnissen, die hier an dieser Stelle als Beispiele genannten Dicarbonsäuren betreffen bei der Rezeptierung des erfindungsgemäßen Flussmittels als ein Bestandteil vom Typ (iv) bewusst zugesetzte niedermolekulare Carbonsäuren, nicht zu verwechseln mit etwaigen ungewollt und unvermeidlich in das erfindungsgemäße Flussmittel gelangten Verunreinigungen in Form von Spuren von bei der Synthese von sauren Oligoestern vom Typ (i) als Carboxylbausteine verwendeten und nicht in den oder die sauren Oligoester eingebauten (nicht einkondensierten) Carbonsäuren.

Beispiele für als Aktivatoren verwendbare halogenhaltige Verbindungen umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Das erfindungsgemäße Flussmittel zeichnet sich dadurch aus, dass es während einer im Bereich von 25 bis 350°C mit einer Aufheizrate von 10 K/min und unter Zutritt von synthetischer Luft durchgeführten TGA bei Erreichen einer Temperatur von 280°C einen Gewichtsverlust von ≥50 Gew.-% erleidet. Bei synthetischer Luft handelt es sich um eine Gasmischung aus 80 Vol.-% (Volumen-%) Stickstoff und 20 Vol.-% Sauerstoff. Für den Fachmann an sich unnötig zu erwähnen, dass bei besagter TGA mit einer Einwaage an erfindungsgemäßem Flussmittel üblicherweise im Bereich von 10 bis 30 mg gearbeitet wird. Der bei besagter TGA festgestellte Gewichtsverlust kann Resultat von Verdampfung und/oder Zersetzung und/oder Oxidation sein. Im Rahmen der Entwicklung des erfindungsgemäßen Flussmittels wurde gefunden, dass das hier beschriebene Gewichtsverlustverhalten wesentlich durch Wahl des Bestandteils (i) nach Art und Mengenanteil beeinflusst werden kann; dazu sei der Blick des Fachmanns insbesondere auf die vorerwähnten Ausführungen bezüglich Art und Menge von Bestandteil (i) gerichtet. Der Fachmann erhält dort wertvolle Anregungen für die Auswahl von Bestandteil (i).

Bevorzugt weist das erfindungsgemäße Flussmittel, d.h. das gesamte aus den Bestandteilen (i) plus (ii) oder (i) plus (ii) plus (iii) oder (i) plus (ii) plus (iv) oder (i) plus (ii) plus (iii) plus (iv) bestehende Flussmittel eine Flussmittel-Säurezahl (FMSZ) im Bereich von 100 bis 250 mg KOH/g auf, bevorzugt im Bereich von 120 bis 220 mg KOH/g auf. Die in dieser Beschreibung und in den Beispielen erwähnte Flussmittel-Säurezahl kann gemäß IPC TM-650 2.3.13 (vom 06/2004 Revision A) bestimmt werden. Die Flussmittel-Säurezahl wird zumindest im Wesentlichen oder vollständig aus den Carboxylgruppen des Bestandteils (i) und den gegebenenfalls durch Bestandteil (iv) beigesteuerten Carboxylgruppen gebildet.

Die Erfindung besteht auch in der Bereitstellung einer Lotpaste bestehend aus 80 bis 92 Gew.-% eines oder mehrerer verschiedener Lote und 8 bis 20 Gew.-% eines erfindungsgemäßen Flussmittels, d.h. des erfindungsgemäßen Flussmittels in einer seiner vorerwähnten Ausführungsformen. Die Summe der Gew.-%-Anteile des oder der Lote und des erfindungsgemäßen Flussmittels beträgt dabei 100 Gew.-%.

Die erfindungsgemäße Lotpaste umfasst wie gesagt 80 bis 92 Gew.-% eines oder mehrerer verschiedener Lote, insbesondere Lot(e) auf Zinnbasis (Lotlegierungen umfassend mindestens 80 Gew.-%, vorzugsweise mindestens 83 Gew.-%, insbesondere 90 bis 99,5 Gew.-% Zinn) oder auf Bismut/Zinn-Basis (Lotlegierungen umfassend 50 bis 60 Gew.-% Bismut und 40 bis 50 Gew.-% Zinn).

Es ist bevorzugt, dass das Lot eine Liquidustemperatur in einem Bereich von 150 bis 350°C, vorzugsweise in einem Bereich von 180 bis 300 °C, aufweist.

Das oder die Lote liegen in der erfindungsgemäßen Lotpaste jeweils als Lotpulver vor, wie für Lotpasten üblich. Die Kugelgröße der das Lotpulver ausmachenden Lotkugeln kann dabei jeder der Klassifikationen gemäß der Norm IPC J-STD-005A entsprechen, d.h. die erfindungsgemäße Lotpaste kann Lotkugeln beliebigen Kugelgrößentyps innerhalb des Typenbereichs T1 bis T7 aufweisen.

Vorzugsweise weist die erfindungsgemäße Lotpaste eine Viskosität von 50 bis 250 Pa s auf. Die in dieser Beschreibung erwähnte Viskosität kann mit einem Platte-Platte-Rheometer mit einem Plattendurchmesser von 50 mm und einem Messspalt von 400 µm (beispielsweise das Platte-Platte-Rheometer Physica MCR 150 der Firma Anton-Paar). bei 25 °C und bei einer Scherrate von 10 s⁻¹ bestimmt werden.

Ein weiterer Gegenstand der vorliegenden Erfindung ist ein Verfahren zur Herstellung einer erfindungsgemäßen Lotpaste.

Dabei umfasst das Verfahren zur Herstellung einer erfindungsgemäßen Lotpaste die Schritte:
- Mischen der Bestandteile eines erfindungsgemäßen Flussmittels; und
- Zugabe eines Lotpulvers wie vorerwähnt.

Die Zugabe des Lotpulvers erfolgt vorzugsweise in mehreren Portionen unter Rühren zu einer vorgelegten Mischung der Bestandteile des erfindungsgemäßen Flussmittels, im Allgemeinen ohne Erwärmen.

Die erfindungsgemäße Lotpaste kann verwendet werden zum Verbinden von elektronischen Bauteilen mit Substraten. Sie kann auch verwendet werden zur Herstellung von Lotdepots auf Substraten.

Beim Verbinden von elektronischen Bauteilen mit Substraten erfolgt die Kontaktierung der Kontaktfläche des Substrates und der Kontaktfläche des elektronischen Bauteils über die erfindungsgemäße Lotpaste.

Ein Verfahren zur Befestigung eines elektronischen Bauteils auf einem Substrat unter Verwendung einer erfindungsgemäßen Lotpaste kann die folgenden Schritte umfassen:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des Lots und anschließendes Abkühlen und Erstarren lassen des Lots unter Ausbilden einer festen Verbindung zwischen dem elektronischen Bauteil und dem Substrat.

Die Schritte a) und b) sind selbsterklärend und bedürfen keiner näheren Erläuterung.

In Schritt c) kann die erfindungsgemäße Lotpaste mittels üblicher dem Fachmann bekannter Verfahren auf eine der oder auf beide Kontaktflächen appliziert werden, beispielsweise mittels Sieb- oder Schablonendruck oder Dispensieren oder Jetten.

In Schritt d) können die Kontaktflächen des elektronischen Bauteils und des Substrates über die Lotpaste miteinander kontaktiert werden. Anders ausgedrückt, es kann eine Sandwichanordnung geschaffen werden aus dem elektronischen Bauteil und dem Substrat mit der Lotpaste zwischen deren Kontaktflächen.

In Schritt e) kann die Sandwichanordnung verlötet werden, indem die Lotpaste über die Liquidustemperatur des Lots erwärmt wird, so dass es zur Bildung einer festen Verbindung zwischen dem elektronischen Bauteil und dem Substrat über die Lotpaste nach anschließendem Abkühlen und Erstarren des Lots kommt. Dabei wird die Lotpaste vorzugsweise so erwärmt, dass das Lot in seine Liquidusphase übergeht, jedoch ohne dass es zu einer Schädigung des elektronischen Bauteils und/oder des Substrates kommt. Die Sandwichanordnung respektive die Lotpaste wird vorzugsweise auf eine Temperatur erwärmt, die 5 bis 60 °C, vorzugsweise 10 bis 50 °C, über der Liquidustemperatur des Lots liegt.

Die das erfindungsgemäße Flussmittel umfassende Lotpaste zeichnet sich aus durch Bildung nur weniger oder keiner Hohlräume in aus ihr erzeugten Lötverbindungen. Dabei gilt, mit steigender vorerwähnter Flussmittel-Säurezahl des erfindungsgemäßen Flussmittels, insbesondere im als bevorzugt schon vorerwähnten Bereich von >120 bis 220 mg KOH/g, verbessert sich die Lötbarkeit der das erfindungsgemäße Flussmittel umfassenden Lotpaste in Gegenwart von Luft.

### Beispiele

Beispiel 1.1 (Herstellung eines sauren Oligoesters aus 1,4-Cyclohexandimethanol und o-Phthalsäure): 100 g 1,4-Cyclohexandimethanol und 150 g o-Phthalsäure wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 215 mg KOH/g. Die gewichtsmittlere Molmasse M_{w} betrug 494.

Beispiel 1.2 (Herstellung eines sauren Oligoesters aus Glyzerin und o-Phthalsäure): 100 g Glyzerin und 150 g o-Phthalsäure wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 220 mg KOH/g. Die gewichtsmittlere Molmasse M_{w} betrug 508.

Beispiel 1.3 (Herstellung eines sauren Oligoesters aus 2-Ethyl-1,3-hexandiol und o-Phthalsäureanhydrid): 100 g 2-Ethyl-1,3-hexandiol und 150 g o-Phthalsäureanhydrid wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 210 mg KOH/g. Die gewichtsmittlere Molmasse M_{w} betrug 497.

### Herstellung von Flussmitteln

Jeder der sauren Oligoester aus den Beispielen 1.1, 1.2 und 1.3 wurde bei 110°C in Diethylenglykolmonohexylether gemäß Tabelle 1 gelöst. Danach wurde die Mischung auf 80°C abgekühlt und es wurden weitere Bestandteile gemäß Tabelle 1 zugefügt und homogenisiert. Für alle anderen Flussmittel wurden die Bestandteile gemäß Tabelle 1 zusammengefügt und homogenisiert.

### Herstellung von Lotpasten

Für die Herstellung der Lotpasten wurden jeweils 11 Gew.-Teile Flussmittel mit jeweils 89 Gew.-Teilen Lotpulver (SnAgCu: Sn 96,5 Gew.-%, Ag 3,0 Gew.-%, Cu 0,5 Gew.-%, Typ 4 gemäß der Norm IPC J-STD-005A) zu Lotpasten vermischt.

### Thermogravimetrische Analyse (TGA) der Flussmittel bezüglich des Gewichtsverlustverhaltens

Die thermogravimetrische Analyse erfolgte mit einer Thermowaage (TG 209 F1 Libra von Netzsch). Hierzu wurden in einem Tiegel aus Aluminiumoxid eine Probenmenge von jeweils 10,0 mg der in Tabelle 1 gelisteten Flussmittel eingewogen. Die TGA wurde in synthetischer Luft (80 Vol.-% Stickstoff und 20 Vol.-% Sauerstoff) mit einer Heizrate von 10 K/min im Bereich von 25°C bis 350°C durchgeführt. Der Gewichtsverlust bei Erreichen von 280°C wurde protokolliert.

### Bestimmung der Rate an Fehlstellen in der Lotstelle

Zur Bestimmung der Voidrate wurden je 5 Leiterplatten (Trägermaterial: FR4 / Kontaktflächen: chemisch Zinn) mit Lotpaste mittels Schablonendruckes (X5 Professional von EKRA) vollflächig bedruckt. Die Druckschablone hatte eine Dicke von 120 µm. Anschließend wurden die Leiterplatten mit Hilfe einer Pick and Place Maschine (Siplace X2 von Siemens) mit je 2 MLF48-6mm Dummy Komponenten (Amkor 48LD/MLF 6x6mm DC Sn) bestückt und einem Reflow-Prozess unter Luftatmosphäre unterzogen. Hierzu wurden die bestückten Leiterplatten bei einer Geschwindigkeit von 76,5 cm/min durch einen Reflowofen (VXS nitro 3150 Typ 634 von Rehm) mit folgender Temperatureinstellung gefahren: Zone 1: 150°C, Zone 2: 160°C, Zone 3: 175°C, Zone 4: 180°C, Zonen 5 und 6: 200°C, Zone 7: 230°C, Zone 8: 255°C und Zone 9: 265°C.

Mittels einer AXI (Automated X-Ray Inspection von Phoenix micromex GE PA1864) wurde die Voidrate unter den Dummy Komponenten ausgewertet. Hierzu wurden 2D-Röntgenaufnahmen der Lotstellen angefertigt und der flächenmäßige Anteil von eingeschlossenem Gasvolumen ausgewertet. Der arithmetische Mittelwert wurde prozentual zur Gesamt-Lötfläche (Kontaktfläche 4,6 mm x 4,6 mm). angegeben und die Ergebnisse den folgenden Voidklassen zugeordnet:
Voidklasse:
+: < 25%
-: ≥ 25 bis < 40%
-: ≥ 40%

### Prüfung des Benetzungsvermögens unter Luftatmosphäre

Die Benetzungseigenschaften der Lotpasten wurden mit Hilfe des Aufschmelztests gemäß der Norm IPC-TM-650 (1/95) Testmethode 2.4.45 an Luftatmosphäre beurteilt. Dazu wurden die zu testenden Lotpasten auf Kupferbleche (20 mm x 20 mm x 0,5 mm) aufgebracht. Sofern die Kupferbleche eine Oxidschicht auf der Oberfläche aufwiesen, wurden diese mit Schleifpapier der Körnung P600 metallisch blank geschliffen und mit Alkohol gereinigt. Kupferbleche, die eine helle und reine Oberfläche aufwiesen, wurden lediglich mit Alkohol gereinigt. Die vorbereiteten Kupferbleche wurden mit Hilfe einer Schablone bedruckt. Dazu wurde die Schablone fest auf das Kupferblech gedrückt, so dass sich die Öffnungen der Schablone in der Mitte des Kupferblechs befanden. Die zu testende Lotpaste wurde auf einen Japanspachtel gegeben und zuerst leicht, dann mit etwas mehr Druck über die Öffnungen der Schablone gestrichen, bis sich keine Lotpaste mehr auf der Schablone befand. Dann wurde die Schablone vorsichtig unter Erhalt des durch die Schablone vorgegebenen Musters entfernt. Das bedruckte Kupferblech wurde für 2 Minuten auf eine erste 200 °C heiße (d.h. auf eine Temperatur unterhalb der Liquidustemperatur des Lots eingestellte) Heizplatte und dann sofort auf eine zweite Heizplatte mit einer 50 °C über der Liquidustemperatur des Lots liegenden Temperatur gelegt. Nach Aufschmelzen der Lotpaste bzw. des Lots wurde das Kupferblech noch 5 Sekunden auf der zweiten Heizplatte belassen und dann davon entfernt und abgekühlt.

Nach dem Abkühlen der Lotpaste wurde beurteilt, ob diese zu Flecken aufgeschmolzen war, die der Größe der Öffnungen der Schablone entsprachen oder zu mehreren kleinen Flecken, und ob die Lotpaste nach dem Aufschmelzen scharfe Ränder aufwies. Weiterhin wurde beurteilt, ob die Oberfläche glänzend oder matt war.

Die Lotpasten wurden in vier Klassen eingeteilt:
Klasse 1: Die umgeschmolzene Fläche war größer als die zuvor mit Lotpaste bedruckte Fläche.
Klasse 2: Die umgeschmolzene Fläche entsprach der zuvor mit Lotpaste bedruckten Fläche.
Klasse 3: Die umgeschmolzene Fläche war kleiner als die zuvor mit Lotpaste bedruckte Fläche (leichte Entnetzung zu erkennen).
Klasse 4: Die Lotpaste hatte eine oder mehrere Lotkugeln gebildet und das Kupferblech nicht benetzt oder war nicht vollständig aufgeschmolzen.

**Tabelle 1: Zusammensetzung der erfindungsgemäßen Flussmittel 1 bis 7 und der Vergleichs-Flussmittel V1 bis V3 sowie Messergebnisse**

| Flussmittel | 1 | 2 | 3 | 4 | 5 | 6 | 7 | V1 | V2 | V3 |
|---|---|---|---|---|---|---|---|---|---|---|
| Oligoester 1.1 | 60 | 50 | 40 | 50 | | | | | | |
| Oligoester 1.2 | | | | | 60 | | | | | |
| Oligoester 1.3 | | | | | | 60 | | | | |
| (Meth)acrylcopolymer (M_{w} 1800, SZ 244 mg KOH/g) | | | | | | | 40 | | | |
| (Meth)acrylcopolymer (M_{w} 4000, SZ 240 mg KOH/g) | | | | | | | | | 40 | |
| Kolophoniumharz (M_{w} | | | | | | | | | | |
| 375, SZ 150 mg KOH/g | | | | | | | | | | 40 |
| Kolophoniumharz (M_{w} 375, SZ 240 mg KOH/g) | | | | | | | | 44 | | |
| Diethylenglykolmonohexylether | 27 | 37 | 47 | 27 | 27 | 27 | 35 | 35 | 43 | 40 |
| N,N,N',N'-Tetramethylethylendiamin | 10 | 10 | 10 | 10 | 10 | 10 | 8 | 5 | 10 | 10 |
| Dodecandisäure | | | | 10 | | | 14 | 13 | 2,5 | 7 |
| Verdicker (Disparlon 6500 von King Industries) | 3 | 3 | 3 | 3 | 3 | 3 | 3 | 3 | 4,5 | 3 |
| Säurezahl des Flussmittels FMSZ (mg KOH/g) | 156 | 135 | 113 | 183 | 162 | 152 | 165 | 190 | 133 | 99 |
| Gewichtsverlust (%) bei 280°C (TGA) | 75 | 80 | 85 | 60 | 70 | 65 | 50 | 40 | 35 | 40 |
| Voidklasse | + | + | + | + | + | + | + | - | - | - |
| Benetzungsvermögen | 2 | 3 | 3 | 2 | 2 | 2 | 2 | 2 | 3 | 4 |

## Patentansprüche

1. Flussmittel bestehend aus
(i) 30 bis 80 Gew.-% eines oder mehrerer saurer Harze,
(ii) 10 bis 60 Gew.-% mindestens eines organischen Lösemittels,
(iii) 0 bis 15 Gew.-% eines oder mehrerer Amine, und
(iv) 0 bis 20 Gew.-% eines oder mehrerer von den Bestandteilen (i) bis (iii) verschiedener Bestandteile,
wobei das Flussmittel sich dadurch auszeichnet, dass es während einer im Bereich von 25 bis 350°C mit einer Aufheizrate von 10 K/min und unter Zutritt von synthetischer Luft durchgeführten thermogravimetrischen Analyse bei Erreichen einer Temperatur von 280°C einen Gewichtsverlust von ≥50 Gew.-% erleidet.

2. Flussmittel nach Anspruch 1, wobei die ein oder mehreren sauren Harze ausgewählt sind aus der Gruppe bestehend aus sauren Oligoestern und sauren (Meth)acrylcopolymeren.

3. Flussmittel nach Anspruch 2, wobei es sich bei dem oder den sauren Oligoestern und dem oder den sauren (Meth)acrylcopolymeren jeweils um Carboxylgruppen tragende Harze handelt.

4. Flussmittel nach Anspruch 2 oder 3, wobei der oder die sauren Oligoester eine Säurezahl im Bereich von 150 bis 300 mg KOH/g und eine gewichtsmittlere Molmasse M_{w} im Bereich von 300 bis 600 aufweisen.

5. Flussmittel nach Anspruch 4, wobei der oder die sauren Oligoester eine Säurezahl im Bereich von 200 bis 250 mg KOH/g und eine gewichtsmittlere Molmasse M_{w} im Bereich von 400 bis 550 aufweisen.

6. Flussmittel nach einem der Ansprüche 2 bis 5, wobei der oder die sauren Oligoester aus einem oder mehreren verschiedenen niedermolekularen Polyolen als Hydroxylbausteine und einer oder mehreren verschiedenen niedermolekularen Polycarbonsäuren als Carboxylbausteine aufgebaut sind.

7. Flussmittel nach einem der Ansprüche 2 bis 6, wobei es sich bei dem oder den sauren Oligoestern um lineare saure Oligoester mit einer oder zwei terminalen Carboxylgruppen respektive um ein Gemisch solcher Oligoester handelt.

8. Flussmittel nach Anspruch 7, wobei der oder die linearen sauren Oligoester aus einem oder mehreren verschiedenen niedermolekularen Diolen und einer oder mehreren verschiedenen niedermolekularen Dicarbonsäuren aufgebaut sind.

9. Flussmittel nach einem der Ansprüche 2 bis 8, wobei die sauren (Meth)acrylcopolymeren eine Säurezahl im Bereich von 100 bis 350 mg KOH/g und eine gewichtsmittlere Molmasse M_{w} im Bereich von 1000 bis 3500 aufweisen.

10. Flussmittel nach Anspruch 9, wobei die sauren (Meth)acrylcopolymeren eine Säurezahl im Bereich von 150 bis 300 mg KOH/g und eine gewichtsmittlere Molmasse M_{w} im Bereich von 1000 bis 3000 aufweisen.

11. Flussmittel nach einem der vorhergehenden Ansprüche mit einer Flussmittel-Säurezahl im Bereich von 100 bis 250 mg KOH/g.

12. Lotpaste bestehend aus 80 bis 92 Gew.-% eines oder mehrerer verschiedener Lote und 8 bis 20 Gew.-% eines Flussmittels nach einem der Ansprüche 1 bis 11.

13. Verwendung einer Lotpaste nach Anspruch 12 zum Verbinden von elektronischen Bauteilen mit Substraten oder zur Herstellung von Lotdepots auf Substraten.
